# EUROPEAN PATENT SPECIFICATION

(11) **EP 2 907 404 B1**
(45) Date of publication and mention of the grant of the patent: **23.08.2017**
(21) Application number: 15155486.2
(22) Date of filing: 17.02.2015
(51) Int. Cl.: A43B 5/04

(54) **Sport footwear and outer shell therefor for winter sports and corresponding production method**
Sportschuh sowie Schale dafür zum Ausüben von Wintersport und zugehöriges Herstellungsverfahren
Chaussure et coque extérieure de chaussure de sport pour la pratique de sports d'hiver et procédé de production correspondant

(30) Priority: 17.02.2014 IT UD20140026
(43) Date of publication of application: 19.08.2015
(73) Proprietor: Calzaturificio dal Bello S.R.L., 31011 Casella d'Asolo (TV) (IT)
(72) Inventor: Dal Bello, Rino, 31011 Asolo (TV) (IT); Colonna, Martino, 40122 Bologna (IT)
(74) Representative: Petraz, Gilberto Luigi

(56) References cited:
- EP-A1- 2 591 692
- WO-A2-2012/092638
- US-A- 3 708 332

## Description

### FIELD OF THE INVENTION

Forms of embodiment described here concern sport footwear, such as footwear for practicing winter sports, in particular a ski-boot, a snowboard boot or similar sport equipment for example.

### BACKGROUND OF THE INVENTION

Ski-boots and snowboard boots, and other sport footwear for winter sports, are commonly formed by an outer shell made of plastic material and an inner boot or liner, commonly made of expanded material, inside the outer shell.

The outer shell of the boot is generally rigid enough to effectively transmit the forces of the user to the sport equipment, for example ski or snowboard, and to protect the user from possible impacts against external objects.

The outer shell is also typically configured to surround the user's foot uniformly and as completely as possible, so that the forces imparted by the user to the sport equipment can be transmitted, and the sport equipment can be efficiently controlled.

The outer shell usually comprises a casing, positioned below, at least to cover the user's foot, and a cuff located above, hinged to the casing.

The boot is usually completed by a tongue, closing attachments, usually adjustable, and a sole to attach to the bindings of the sport equipment.

The casings of the boots are generally made to adapt to a vast range of foot shapes, since these can vary considerably from user to user.

To vary the internal volume of the shell, and to determine it stably, attachments or other similar clamping devices are used.

The outer shell must not however exert an excessive pressure on the foot, since this can cause a sensation of discomfort that can also cause pain.

Sports footwear made of thermoformable plastic materials is known.

Such materials can be deformed at least locally by applying heat and mechanical forces so they can be suitably shaped and modeled. The thermoformable plastic materials are used in various known applications to make both the outer shell and the inner boot.

For example, patents EP-A-0.004.829 and FR-A-2.739.760 describe the production and shaping of inner boots made of expanded thermoformable materials. The inner boots can be deformed locally by the heat generated by the skier's body, at the points where greatest pressure is applied during skiing.

However, the local deformation of the inner boot is not always able to sufficiently reduce the pressure at the most critical points of the foot, because the outer shell is made of rigid material and the inner boot alone is not able to perform this function.

Documents EP-A-0.916.273, US-A-6,474,004 and WO-A-2004/052134 describe the possibility of deforming the casing to make it anatomically compatible with the foot.

In order to shape the shell to adapt it as much as possible to the shape of the user's foot, some portions of the casing and/or the cuff can be heated locally beyond the softening point of the thermoplastic material commonly used, which is typically more than 100°C.

The skier's foot, obviously, is not able to support these temperatures and the shaping, also called thermoforming, is made with suitable molds that reproduce the shape of the foot.

In particular, techniques are used that provide a first step in which the thermoforming of the outer shell is performed when the footwear is off the foot, and afterward, after the outer shell has been cooled, a second step in which the user tries it on.

These techniques can provide to repeat the above steps until a suitable configuration for the user has been achieved.

Consequently, the techniques used are complicated, laborious and take a long time.

The casings and the cuffs commonly consist of thermoplastic elastomers, the final shape of which is conferred through an injection molding technique. The materials most commonly used are thermoplastic polyurethanes, polyolefins toughened with rubber SBR, SBS or SEBS, and polyamides.

Thermoplastic polyurethanes consist of rigid segments, which are generally formed by aromatic isocyanates, and soft components, which are generally formed by polymers with a polyester or aliphatic polyether base. Polyurethanes have optimum characteristics from a viscous-elastic point of view, and allow a good behavior during flexion and an elastic return which occur during various stages in skiing.

However, thermoplastic polyurethane softens at temperatures above 150°C and for this reason is not easily thermoformable to adapt to the shape of the foot as described above.

Document US-A-2008/000109 describes the use of mixes of polyurethane with polycaprolactone in order to reduce the softening temperature of the polyurethane under 100°C. However, polyurethane has a high density (1.15-1.3 kg/L), which is higher than those of the other plastics used to make ski-boots, and this leads to a high overall weight. Furthermore, the cost of polyurethanes is higher than that of other plastics used for making ski-boots, such as for example toughened polyolefins.

A second group of materials used to make casings and cuffs of ski-boots are elastomers with a polyamide base, which are known by the commercial name of Pebax ® or Vestamide ®.

The main segments that make up these materials are usually made of PA 11 (undecanoic-acid-11) or PA 12 (omega-aminododecanoic acid). On the contrary, an aliphatic polyether is usually used as the material for the soft segment.

However, these materials have a particularly accentuated elastic behavior that does not make them ideal for the production of all types of ski-boots. Indeed, this behavior, combined with their high cost, means that elastomers with a polyamide base are used in limited fields, such as for example for Alpine ski-boots.

Furthermore, polyamides have a softening temperature of 140°C, which is very close to the melting temperature which is normally 160-180°C. This makes it very difficult to shape them by thermoforming them without, at the same time, melting or degrading the material.

For this reason WO-A-2012/092638 describes a modification of polyamides by adding an ionomeric polymer based on methacrylic acid, in order to lower its softening temperature. The material thus obtained can be modified by applying an external pressure as described, for example, in US-A-8,549,688.

However, these modified polyamides have the same disadvantages as common polyamides.

Document US-A-2004/0235586 describes the preparation of parts of footwear consisting of a composite material comprising a mixture of thermoplastic polyurethanes, thermoplastic ionomers and organic fibers. In this way, the hardness and resistance to abrasion of the plastic parts are increased compared with thermoplastic polyurethane alone.

For this type of materials too, the presence of thermoplastic polyurethanes leads to an increase in weight and the overall cost of the sport footwear.

Toughened polyolefins are among the most used materials for ski-boots, since they have a very low density (0.85-0.95 kg/L, less than that of polyamides, which varies from 1 to 1.1 kg/L), and also limited costs.

They are materials based on copolymers of polyethylene, polypropylene and other olefins mixed with rubbers such as for example SBS, SBR or SEBS.

They also have high resistance to impacts, even at low temperature. One of the biggest disadvantages of polyolefins is their low resistance to scratching and the small difference between the softening temperature (105°C) and the melting temperature (130-150°C), which makes it difficult to thermoform them.

Document EP-A-2.591.692 is also known, which describes sport footwear for winter sports, in which the casing can be made with toughened polyethylenes.

Document US-A-3,708,332 is also known, which describes a method for making a stiffening element for footwear by coating a substrate of fabric with a blend of ionomeric polyolefins.

There is therefore a need to perfect sport footwear, such as for example sport footwear for practicing winter sports, which can overcome at least one of the disadvantages of the state of the art.

In particular, one purpose of the present invention is to obtain sport footwear, such as for example sport footwear for practicing winter sports, for example but not exclusively a ski-boot, which is easy to model at temperatures of less than 100°C to adapt to the user's foot, at the same time keeping the mechanical properties suitable to allow resistance to impacts and scratches during use.

Another purpose of the present invention is to perfect a method to produce sport footwear that allows to obtain sport footwear with optimum characteristics of resistance to impacts, scratches and abrasion and which at the same time is easy to personalize on a user's foot.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, forms of embodiment described here concern sport footwear comprising at least an outer shell.

According to the present description, at least part of the outer shell is made with a mixture of polymers comprising at least one toughened polyolefin and at least one ionomeric polymer.

Toughened polyolefin is a low-density material with a limited cost compared to materials based on polyamides or polyurethane, and this allows to make an economical sport footwear with reduced weight.

The presence of the toughened polyolefin also confers resistance to impacts and resistance to abrasion on the polymer mixture.

The ionomeric polymer allows to obtain inside the polymer mixture a physical "network" that can be interrupted, substantially cleanly, when determinate temperatures are reached. This entails the transition of the polymer mixture from a stiff condition to a softened condition, which allows to model the outer shell.

Furthermore, by suitably varying the concentration of the ionomeric polymer, it is possible to obtain a desired thermoforming temperature, preferably lower than 100°C. This allows in particular to model the outer shell by thermoforming, according to the user's requirements and the pressures exerted on his/her foot when the sport footwear is worn.

According to possible forms of embodiment, the ionomeric polymer is present from 5% to 95% in weight inside the polymer mixture.

According to other possible forms of embodiment, the ionomeric polymer is present from 25% to 35% in weight inside the polymer mixture.

According to other variant forms of embodiment, the toughened polyolefin comprises one or more of either polyethylene copolymers, polypropylene copolymers and/or other polyolefins, mixed with an elastomer.

In other forms of embodiment, the ionomeric polymer has an ethylene base or other olefins base, in particular propylene, butylene or similar, with the presence of carboxylic groups partly or completely salified with cations. In a variant of these forms of embodiment, the carboxylic groups can be derived from carboxylic acids chosen from acrylic acid or methacrylic acid or other types of carboxylic acids containing a double carbon-carbon bond, suitable to allow a copolymerization with polyolefins.

Furthermore, according to other variants of the present invention, the polymer mixture has a thermoforming temperature comprised between 60°C and 100°C.

According to other forms of embodiment, the ionomeric polymer comprises ionic groups, inserted in its macromolecular chain, chosen from either alkali metal cations and cations of alkaline-earth metals.

According to possible forms of embodiment of the present invention, the sport footwear is for practicing winter sports. According to variants described here, the sport footwear is a ski-boot or a snowboard boot.

The present invention also concerns an outer shell for sport footwear, wherein at least part of the outer shell is made with a polymer mixture comprising at least one toughened polyolefin and at least one ionomeric polymer.

Other forms of embodiment described here concern a method to produce sport footwear, said method comprising a step of heat molding by injection of an outer shell. According to one form of embodiment, the molding step provides the molding of at least one part of the outer shell with a polymer mixture comprising at least one toughened polyolefin and at least one ionomeric polymer.

According to a possible variant, the method comprises a thermoforming step of the part of the outer shell at a temperature comprised between 60°C and 100°C.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic view of some forms of embodiment of a ski-boot according to the present description;
- fig. 2 is a graph showing the development of the elasticity modulus as a function of the temperature of a material used to make forms of embodiment according to the present invention.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the invention, of which one or more examples are shown in the attached drawings. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

Before describing these forms of embodiment, we would also clarify that the present description is not limited in its application to the details of the construction or disposition of the components as described in the following description using the attached drawings. The present description can provide other forms of embodiment and can be achieved or executed in various other ways. We also clarify that the phraseology and terminology used here are used for the purposes of description and must not be considered as restrictive. The word "comprise" and variants of the word such as "comprises" and "comprising" are used here to indicate the inclusion of a clearly expressed whole or clearly expressed wholes but not the exclusion of any other whole or any other wholes, unless in the context or in use an exclusive interpretation of the word is required. In particular, in the present description the word "comprising" indicates the elements listed, or equivalent structural elements or functions, with the possible addition of one or more elements not listed. The expressions "which/that has" and "which/that provides" must not be understood exhaustively, unless the context suggests otherwise.

Unless otherwise defined, all the technical and scientific terms used here and hereafter have the same meaning as commonly understood by a person with ordinary experience in the field of the art to which the present invention belongs.

Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

All the measurements are made, unless otherwise indicated, at 25°C and at atmospheric pressure. All the temperatures, unless otherwise indicated, are expressed in degrees Celsius.

All the percentages and ratios indicated refer to the weight of the total composition (w/w), unless otherwise indicated.

All the percentage ranges shown here are supplied with the provision that the sum with respect to the overall composition is 100, unless otherwise indicated.

All the ranges shown here are comprehensive of the extremes, including those that show a range "between" two values, unless otherwise indicated.

The present description also includes the ranges deriving from the overlapping or union of two or more ranges described, unless otherwise indicated.

The present description also includes the ranges that can derive from the combination of two or more point values described, unless otherwise indicated.

Words such as "about", "generally", "substantially" and suchlike are intended in their function of modifying a term or value that is not absolute, but is not shown in the state of the art. Such terms will be defined by the specific circumstances, and by the terms they are intended to modify according to the common acceptance of such terms in the particular field. They will take into account at least the degree of experimental error expected, technical error and instrumental error for a given technique adopted for measuring a value. Unless otherwise indicated, in the present description the singular form shall also include the plural form, unless the context suggests otherwise.

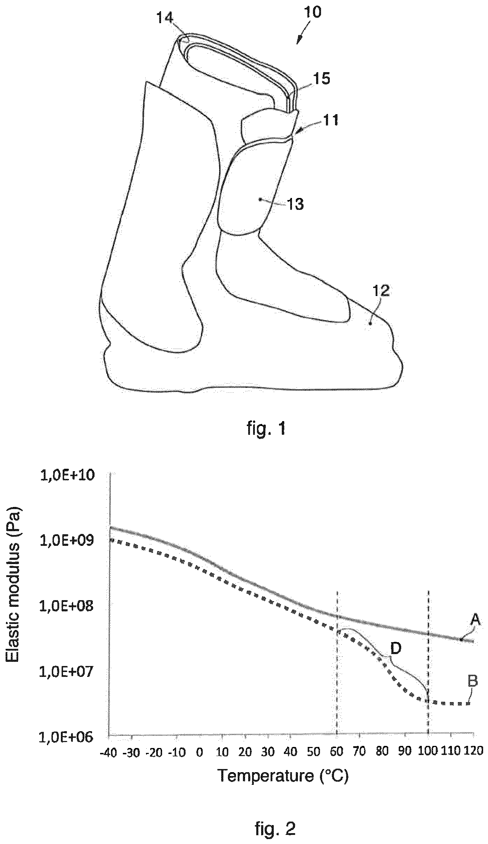

Fig. 1 is used to describe forms of embodiment of sport footwear 10, such as for example sport footwear for practicing winter sports, in particular for example a ski-boot, a snowboard boot or similar sport equipment.

In some forms of embodiment, the sport footwear 10 comprises an outer shell 11 configured to receive the user's foot.

The outer shell 11 comprises a rigid lower part, or casing, 12, inside which the user's foot is disposed, and an upper part or cuff 13, also rigid to contain and surround the ankle joint and the lower part of the user's leg, substantially up to the calf.

The cuff 13 is pivoted to the casing 12, around a pivoting axis disposed in correspondence with the malleolar zone, and is therefore able to partly oscillate with respect to the casing 12.

The casing 12 and the cuff 13 are typically provided with attachments, closing hooks, Velcro® straps or other suitable clamping means, not shown in the drawings, which complete the sport footwear 10, configured to stably constrain the outer shell 11 to the user's foot. Furthermore, the sport footwear 10 comprises a sole, also not shown in fig. 1, provided typically in the lower part of the casing 12.

The outer shell 11 typically has an upper opening 14 through which the user's foot can be inserted. The upper opening 14 is usually provided on the casing 12.

The sport footwear 10 can also comprise an internal padding 15, generally identified by the term inner boot.

The internal padding 15 can usually be inserted inside the outer shell 11 and is typically suitable to attenuate and damp the mechanical stresses conveyed by the ski or snowboard to the user's foot and ankle during his/her sports activity.

In some forms of embodiment, at least part of the outer shell 11 can be made of a polymer mixture, comprising at least one toughened polyolefin and one or more ionomeric polymers.

Forms of embodiment can also be provided in which the polymer mixture consists exclusively of one or more toughened polyolefins and one or more ionomeric polymers, that is, consisting exclusively of said two classes of polymers. According to the present description, the ionomeric polymer is a polymer material, containing ionic groups inserted into the macromolecular chain.

The ionomeric polymers obtain, in particular, inside the polymer mixture a physical "network" that can be interrupted when determinate temperatures are reached, typically less than 100°C.

On a macroscopic level, this leads to the softening of the polymer mixture when a determinate range of temperatures is reached and exceeded; the range typically goes from a few centigrade degrees to a few dozen degrees depending on the compound made.

Using toughened polyolefin as the basic material allows to significantly reduce the final weight of the sport footwear 10, thanks to its lesser density with respect to other basic materials, such as polyamides or polyurethanes.

In some forms of embodiment, the outer shell 11 can be made entirely with the polymer mixture according to the present description.

In other forms of embodiment, the casing 12 can be made with the polymer mixture, while the cuff 13 can be made of another polymer material, such as a material with a polyolefin, polyurethane or polyamide base.

In some forms of embodiment, the cuff 13 can be made with the polymer mixture, while the casing 12 can be made of a different polymer material.

In other forms of embodiment, only part of the casing 12 or only part of the cuff 13 can be made with the polymer mixture.

In possible implementations, the toughened polyolefin can comprise one or more polyethylene copolymers, polypropylene copolymers and/or other olefins, mixed with one or more elastomers, where elastomer means a natural or synthetic polymer with elastic properties, such as rubber, for example but not restrictively, EPDM (Ethylene-Propylene-Diene Monomer), SBR (styrene butadiene rubber), SBS (styrene butadiene styrene) or SEBS (styrene ethylene butadiene styrene) or mixtures thereof.

In some forms of embodiment, the ionomeric polymer can have an ethylene base or other olefins base, such as propylene, butylene or similar, with the presence of carboxylic groups partly or completely salified with cations.

In possible forms of embodiment, the carboxylic groups can be derived from acrylic acid or methacrylic acid or other types of carboxylic acids containing a double carbon-carbon bond, suitable to allow a copolymerization with polyolefins.

The toughened polyolefins and the ionomeric polymers described above can be completely mixed even as a plurality of parameters vary, such as for example the components of the ionomer, the type of cation used and the content of the ionic groups.

By varying said parameters it is possible to obtain, in particular, a polymer mixture that has the desired rigidity of the outer shell 11, in the range of temperatures used during sports activity, and at the same time allows to obtain the desired thermoforming temperature.

In particular, in some forms of embodiment, the ionomeric polymer inside the polymer mixture can vary from 5% to 95% in weight, preferably from 25% to 35% in weight.

The increase in the quantity of the ionomer allows to obtain a cleaner transition in the change of rigidity in the polymer mixture as the temperature varies.

On the contrary, a greater quantity of toughened polyolefin allows to emphasize the properties of mechanical resistance, deriving from the toughened polyolefin itself.

The thermoforming temperature is preferably less than 100°C, to prevent the use of too high temperatures during the modeling operations, and preferably more than 60°C, since a thermoforming temperature near to ambient temperature could lead to a loss of shape of the sport footwear 10.

Furthermore, the addition of the ionomeric polymer has no negative effects on the resistance to impacts at low temperature, that is, for temperatures that can reach for example -30°C.

Fig. 2 shows a first curve A, which identifies the trend of the elasticity modulus of a common toughened polyolefin, and a second curve B, which shows the trend of a polymer mixture comprising in particular an ionomeric polymer with a methacrylic acid base, salified with various types of cations. The y axis shows the elastic modulus, expressed in Pascal [Pa] and the x axis shows the temperature, expressed in degrees Celsius [°C].

In particular, the second curve B has a segment with a decrease D in correspondence with temperatures comprised between 60°C and 100°C. The decrease D is much more accentuated with respect to the trend of the first curve A in the same temperature range, which allows to pass from a rigid condition, for temperatures below 60°C, to a deformable condition, for temperatures above 100°C.

In some forms of embodiment, the ionic groups of the ionomer can be alkali metal cations and cations of alkaline-earth metals.

In some forms of embodiment, other types of cations can be used, both inorganic and organic, without departing from the field of protection of the present invention.

In some forms of embodiment, the outer shell 11 can be made in a hot molding step by injection.

In some forms of embodiment, the molding step can be single stage.

Processes with several stages are in any case compatible with the use of the polymer mixture according to the present description.

During the molding step at least one part of the outer shell 11 is molded with the polymer mixture.

Subsequently, to adapt the shape of the outer shell 11 to a user's foot, a step may be provided of thermoforming the outer shell 11 at temperatures comprised between 60°C and 100°C.

In particular, thanks to these temperatures, which are lower than normal thermoforming temperatures, it is possible to thermoform the outer shell 11 with the user's foot directly inserted in the outer shell 11.

It is clear that modifications and/or additions of parts may be made to the sport footwear 10 as described heretofore, without departing from the field and scope of the present invention.

It is also clear that, although the present invention has been described with reference to some specific examples, a person of skill in the art shall certainly be able to achieve many other equivalent forms of sport footwear 10, having the characteristics as set forth in the claims and hence all coming within the field of protection defined thereby.

Although the above refers to forms of embodiment of the invention, other forms of embodiment can be provided without departing from the main field of protection, which is defined by the following claims.

## Claims

1. Outer shell for a sport footwear, **characterized in that** at least part of said outer shell is made of a polymer mixture comprising at least one toughened polyolefin and at least one ionomeric polymer.

2. Outer shell as in claim 1, **characterized in that** the ionomeric polymer is present from 5% to 95% in weight, inside said polymer mixture.

3. Outer shell as in claim 1 or 2, **characterized in that** the ionomeric polymer is present from 25% to 35% in weight, inside said polymer mixture.

4. Outer shell as in claim 1, 2 or 3, **characterized in that** said toughened polyolefin comprises one or more of either polyethylene copolymers, polypropylene copolymers and/or other polyolefins, mixed with an elastomer.

5. Outer shell as in any claim hereinbefore from 1 to 4, **characterized in that** said ionomeric polymer has an ethylene base or other olefins base, in particular propylene, butylene or similar, with the presence of carboxylic groups partly or completely salified with cations.

6. Outer shell as in claim 5, **characterized in that** said carboxylic groups are derived from carboxylic acids chosen from either acrylic acid or methacrylic acid or other types of carboxylic acids containing a double carbon-carbon bond, suitable to allow a copolymerization with polyolefins.

7. Outer shell as in any claim hereinbefore, **characterized in that** said polymer mixture has a thermoforming temperature comprised between 60°C and 100°C.

8. Outer shell as in any claim hereinbefore from 1 to 7, **characterized in that** said ionomeric polymer comprises ionic groups, inserted in its macromolecular chain, chosen from either alkali metal cations or cations of alkaline-earth metals.

9. Sport footwear comprising an outer shell (11) as in any claim hereinbefore from 1 to 8.

10. Sport footwear as in claim 9, wherein said sport footwear is a footwear for practicing winter sports.

11. Sport footwear as in claim 9 or 10, wherein said sport footwear is a ski-boot or a snowboard boot.

12. Method to produce a sport footwear (10), comprising a step of heat molding by injection of an outer shell (11), **characterized in that** said molding step provides the molding of at least one part of said outer shell (11) with a polymer mixture comprising at least one toughened polyolefin and at least one ionomeric polymer.

13. Production method as in claim 12, **characterized in that** it comprises a thermoforming step of said part of said outer shell (11) at a temperature comprised between 60°C and 100°C.

## Patentansprüche

1. Außenschale für einen Sportschuh, **dadurch gekennzeichnet, dass** zumindest ein Teil der Außenschale aus einer Polymermischung besteht, die zumindest ein gehärtetes Polyolefin und zumindest ein ionomeres Polymer umfasst.

2. Außenschale nach Anspruch 1, **dadurch gekennzeichnet, dass** das ionomere Polymer in der Polymermischung in 5 Gew.-% bis 95 Gew.-% vorliegt.

3. Außenschale nach Anspruch 1 oder 2, **dadurch gekennzeichnet, dass** das ionomere Polymer in der Polymermischung in 25 Gew.-% bis 35 Gew.-% vorliegt.

4. Außenschale nach Anspruch 1, 2 oder 3, **dadurch gekennzeichnet, dass** das gehärtete Polyolefin eines oder mehrere aus Polyethylen-Copolymeren, Polypropylen-Copolymeren und/oder anderen Polyolefinen, mit einem Elastomer gemischt, umfasst.

5. Außenschale nach einem der vorhergehenden Ansprüche 1 bis 4, **dadurch gekennzeichnet, dass** das ionomere Polymer eine Ethylenbasis oder eine Basis von anderen Olefinen, insbesondere Propylen, Butylen oder dergleichen hat, mit dem Vorliegen von Carboxylgruppen, die teilweise oder ganz in Salzform mit Kationen vorliegen.

6. Außenschale nach Anspruch 5, **dadurch gekennzeichnet, dass** die Carboxylgruppen aus Carbonsäuren abgeleitet werden, die entweder aus Acrylsäure oder Methacrylsäure oder anderen Arten von Carbonsäuren ausgewählt sind, die eine Kohlenstoff-Kohlenstoff-Doppelbindung enthalten, die dafür geeignet ist, eine Copolymerisation mit Polyolefinen zu ermöglichen.

7. Außenschale nach einem der vorhergehenden Ansprüche, **dadurch gekennzeichnet, dass** die Polymermischung eine Thermoformungstemperatur zwischen 60°C und 100°C hat.

8. Außenschale nach einem der vorhergehenden Ansprüche 1 bis 7, **dadurch gekennzeichnet, dass** das ionomere Polymer ionische Gruppen umfasst, die in seine makromolekulare Kette eingefügt sind, die entweder aus Alkalimetallkationen oder Kationen von Erdalkalimetallen ausgewählt sind.

9. Sportschuh umfassend eine Außenschale (11) nach einem der vorhergehenden Ansprüche 1 bis 8.

10. Sportschuh nach Anspruch 9, worin der Sportschuh ein Schuh zum Ausüben von Wintersport ist.

11. Sportschuh nach Anspruch 9 oder 10, worin der Sportschuh ein Skischuh oder ein Snowboardschuh ist.

12. Verfahren zur Herstellung eines Sportschuhs (10), umfassend einen Schritt des Heißpressens durch Spritzen einer Außenschale (11), **dadurch gekennzeichnet, dass** der Schritt des Pressens das Pressen von zumindest einem Teil der Außenschale (11) mit einer Polymermischung vorsieht, die zumindest ein gehärtetes Polyolefin und zumindest ein ionomeres Polymer umfasst.

13. Herstellungsverfahren nach Anspruch 12, **dadurch gekennzeichnet, dass** es einen Thermoformungsschritt des Teils der Außenschale (11) bei einer Temperatur zwischen 60°C und 100°C umfasst.

## Revendications

1. Coque extérieure pour une chaussure de sport, **caractérisée en ce qu'**au moins une partie de ladite coque extérieure est constituée d'un mélange polymère comportant au moins une polyoléfine renforcée et au moins un polymère ionomère.

2. Coque extérieure selon la revendication 1, **caractérisée en ce que** le polymère ionomère est présent de 5 % à 95 % en poids, à l'intérieur dudit mélange polymère.

3. Coque extérieure selon la revendication 1 ou 2, **caractérisée en ce que** le polymère ionomère est présent de 25 % à 35 % en poids, à l'intérieur dudit mélange polymère.

4. Coque extérieure selon la revendication 1, 2 ou 3, **caractérisée en ce que** ladite polyoléfine renforcée comporte un ou plusieurs éléments parmi des copolymères de polyéthylène, des copolymères de polypropylène et/ou d'autres polyoléfines, mélangés avec un élastomère.

5. Coque extérieure selon l'une quelconque des revendications 1 à 4, **caractérisée en ce que** ledit polymère ionomère a une base d'éthylène ou une base d'autres oléfines, en particulier du propylène, du butylène ou similaire, avec la présence de groupes carboxyliques partiellement ou entièrement salifiés avec des cations.

6. Coque extérieure selon la revendication 5, **caractérisée en ce que** lesdits groupes carboxyliques sont dérivés d'acides carboxyliques choisis parmi de l'acide acrylique ou de l'acide méthacrylique ou d'autres types d'acides carboxyliques contenant une double liaison carbone-carbone, adaptés pour permettre une copolymérisation avec des polyoléfines.

7. Coque extérieure selon l'une quelconque des revendications ci-dessus, **caractérisée en ce que** ledit mélange polymère a une température de thermoformage comprise entre 60 °C et 100 °C.

8. Coque extérieure selon l'une quelconque des revendications 1 à 7 ci-dessus, **caractérisée en ce que** ledit polymère ionomère comporte des groupes ioniques, insérés dans sa chaîne macromoléculaire, choisis parmi des cations de métaux alcalins ou des cations de métaux alcalino-terreux.

9. Chaussure de sport comportant une coque extérieure (11) selon l'une quelconque des revendications 1 à 8 ci-dessus.

10. Chaussure de sport selon la revendication 9, ladite chaussure de sport étant une chaussure pour la pratique des sports d'hiver.

11. Chaussure de sport selon la revendication 9 ou 10, ladite chaussure de sport étant une botte de ski ou une botte de planche à neige.

12. Procédé pour produire une chaussure de sport (10), comportant une étape consistant à mouler à chaud par injection une coque extérieure (11), **caractérisé en ce que** ladite étape de moulage assure le moulage d'au moins une partie de ladite coque extérieure (11) avec un mélange polymère comportant au moins une polyoléfine renforcée et au moins un polymère ionomère.

13. Procédé de production selon la revendication 12, **caractérisé en ce qu'**il comporte une étape de thermoformage de ladite partie de ladite coque extérieure (11) à une température comprise entre 60 °C et 100 °C.
